# EUROPEAN PATENT SPECIFICATION

(11) **EP 3 575 896 B1**
(45) Date of publication and mention of the grant of the patent: **08.03.2023**
(21) Application number: 18730210.4
(22) Date of filing: 28.04.2018
(51) Int. Cl.: G05B 19/04, G05B 19/042, B64C 39/02, G05D 1/10

(54) **UNMANNED AERIAL VEHICLE CONTROL SYSTEM AND UNMANNED AERIAL VEHICLE CONTROL METHOD**
STEUERUNGSSYSTEM FÜR UNBEMANNTES LUFTFAHRZEUG UND VERFAHREN ZUR STEUERUNG EINES UNBEMANNTEN LUFTFAHRZEUGS
SYSTÈME ET PROCÉDÉ DE COMMANDE DE VÉHICULE AÉRIEN SANS PILOTE

(30) Priority: 13.04.2018 CN 201810331461
(43) Date of publication of application: 04.12.2019
(73) Proprietor: Liaoning Zhuanglong Unmanned Aerial Vehicle Technology Co., Ltd., Liaoning 110000 (CN)
(72) Inventor: ZHANG, Li, Shenyang, Liaoning 110000 (CN); CHEN, Mingfei, Shenyang, Lianoning 110000 (CN); GUO, Shiquan, Shenyang, Lianoning 110000 (CN); WANG, Youdong, Shenyang, Lianoning 110000 (CN); SUN, Jiye, Shenyang, Lianoning 110000 (CN); YAN, Zhimin, Shenyang, Lianoning 110000 (CN); GUO, Xiangqun, Shenyang, Lianoning 110000 (CN); WANG, Jingjing, Shenyang, Lianoning 110000 (CN); ZHANG, Kuiwen, Shenyang, Lianoning 110000 (CN); XU, Xin, Shenyang, Lianoning 110000 (CN)
(74) Representative: Capitán García, Maria Nuria
(86) International application number: PCT/CN2018/085140
(87) International publication number: WO 2019/196145

(56) References cited:
- EP-A1- 3 140 710
- EP-B1- 3 140 710
- WO-A1-2018/027902
- CN-A- 105 334 863
- CN-A- 105 636 042
- CN-A- 105 955 295
- CN-A- 106 093 983
- CN-A- 106 093 983
- CN-A- 106 774 367
- CN-A- 107 770 166
- KR-A- 20180 034 000

## Description

### Technical Field

The present disclosure relates to the technical field of unmanned-aerial-vehicle (UAV) control, in particular to a UAV control system and a UAV control method.

### Background Art

UAVs are unmanned aircrafts that operated using radio remote control devices and self-contained program control devices.

Currently, UAVs are monitored and controlled by means of a regular UAV ground station control scheme. Ground stations are usually smart mobile terminals or specialized UAV control devices and the like. These ground stations are provided with data transmission modules for wireless communication with the UAVs, similarly, data transmission modules are also provided on the UAVs. The data interaction between the ground stations and the UAVs is realized through the data transmission modules respectively provided on the ground stations and the UAVs.

However at present, the connections of the data transmission modules respectively to the ground stations and the UAVs can only be in pairs, that is, one UAV can only be controlled and monitored by one ground station. This has resulted in the inability to meet the needs of monitoring the UAVs through multiple terminals, as well as making any terminal in the monitoring terminals as a control terminal.

Document CN 105 636 042 A discloses a mobile communication device control method comprising: receiving a first access request transmitted by a first requesting terminal which is located in a signal cover range of a base station of a mobile communication device, responding the first access request to authenticate and certificate the first requesting terminal, if the certification of the first requesting terminal passes, allowing the access of the first requesting terminal, by the first requesting terminal, controlling data transmission between first requesting terminal and the mobile communication device.

Document WO 2018/027902 A1 discloses a redundancy control method comprising: receiving a control signal of a main remote controller by means of a receiver corresponding to the main remote controller, receiving a control signal of a backup remote controller by means of a receiver corresponding to the backup remote controller, and selecting one control signal from the control signal of the main remote controller and the control signal of the backup remote controller to control a movable object.

### Disclosure of the Invention

In view of this, the purpose of the present invention is to provide a UAV control system and a UAV control method, to implement the multi-terminal monitoring of UAVs, as well as to make any terminal in the monitoring terminals as a control terminal, so as to meet currently needs of the multi-terminal monitoring of the UAVs, as well as of making any terminal in the monitoring terminals as a control terminal.

In a first aspect, the present invention provides a UAV control system according to claim 1.

With reference to the first aspect, an embodiment of the present invention provides a second possible implementation of the first aspect, wherein the base station is further configured to detect, upon detecting that the priority of the first terminal is not higher than the priority of the second terminal, whether a control instruction of the second terminal to the UAV is received within a preset period of time; and
reclaim (revoke), if the control instruction of the second terminal to the UAV is not received within the preset period of time, the control authority of the second terminal on the UAV, and enable the accessibility of the first terminal to the control authority on the UAV.

With reference to the first aspect, an embodiment of the present invention provides a third possible implementation of the first aspect, wherein the first terminal is further configured to generate a UAV monitoring request, and send the UAV monitoring request to the base station; and receive the UAV state information returned by the base station according to the UAV monitoring request;
the base station is further configured to receive a UAV monitoring request sent by the first terminal, and return the UAV state information of the UAV to the first terminal according to the UAV monitoring request.

With reference to the first aspect, an embodiment of the present invention provides a fourth possible implementation of the first aspect, wherein the UAV control system further comprises: a differential global positioning system (GPS) base station;
the differential GPS base station is configured to acquire the base station positioning data sent by a satellite, acquire a difference between the real position data of the differential GPS base station and the base station positioning data to obtain a position difference term, and send the position difference term to the base station;
the base station is further configured to receive the position difference term sent by the differential GPS base station, and the UAV position information transmitted by the UAV; and generate the UAV real position information according to the position difference term and the UAV position information.

In a second aspect, the present invention further provides a UAV control method according to claim 7.

With reference to the second aspect, an embodiment of the present invention provides a second possible implementation of the second aspect: detecting, upon detecting that the priority of the first terminal is not higher than the priority of the second terminal, whether a control instruction of the second terminal to the UAV is received within a preset period of time;
wherein if the control instruction of the second terminal to the UAV is not received within the preset period of time, the control authority of the second terminal on the UAV is reclaimed, and the accessibility of the first terminal to the control authority on the UAV is enabled.

With reference to the second aspect, an embodiment of the present invention further provides a third possible implementation of the second aspect: receiving a UAV monitoring request sent by the first terminal; and
returning, according to the UAV monitoring request, the UAV state information of the UAV to the first terminal.

With reference to the second aspect, an embodiment of the present invention also provides a fourth possible implementation of the second aspect:
receiving the position difference term sent by the differential GPS base station, and the UAV position information transmitted by the UAV; and
generating the UAV real position information according to the position difference term and the UAV position information.

The UAV control system according to the present invention comprises: a base station, a first terminal, and a second terminal. When the first terminal needs to acquire the control authority on the UAV, it will send a UAV control request to the base station; and the base station enables the accessibility of the first terminal to the control authority on the UAV, only after receiving the UAV control request sent by the first terminal and after determining according to the current state of the second terminal whether the first terminal has the priority control authority to control the UAV. Therefore through this process, based on the priority control authority of the terminals, transferring of the control authority on the UAV between the multiple terminals is achieved, realizing the multi-terminal control of the UAV.

To make the above purposes, features, and advantages of the present disclosure more obvious and easy to understand, the following preferred embodiments are described in details with reference to the accompanying figures.

### Brief Description of Drawings

To more clearly illustrate the technical solutions of the embodiments of the present disclosure, the figures used in the embodiments will be briefly described below, it should be understood that the following figures only show some embodiments of the present disclosure, and therefore should not be regarded as a limitation of the scope, and for those skilled in the art, other related figures may also be obtained based on these figures without creative work.
Fig.1 shows a schematic structural diagram of a UAV control system provided by embodiments of the present disclosure;
Fig.2 shows a schematic structural diagram of another UAV control system provided by embodiments of the present disclosure;
Fig.3 shows a flow diagram of a UAV control method provided by embodiments of the present disclosure;
Fig.4 shows a specific exemplary flow diagram of a UAV control method provided by embodiments of the present disclosure;
Fig.5 shows another specific exemplary flow diagram of a UAV control method provided by embodiments of the present disclosure;
Fig.6 shows a further specific exemplary flow diagram of a UAV control method provided by embodiments of the present disclosure; and
Fig.7 shows a schematic structural diagram of a computer device provided by embodiments of the present disclosure.

Reference signs:
10- base station, 20- first terminal, 30- second terminal, 40- differential GPS base station, 71- memory, 72- processor.

### Detailed Description of Embodiments

To make the purposes, technical solutions, and advantages of the embodiments of the present application more clear, the following clearly describes the technical solutions in the embodiments of the present application with reference to the accompanying figures in the embodiments of the present application, obviously, the described embodiments are merely exemplary, it is part of the present application however not all of the examples. The components of the embodiments of the present application, which are generally described and illustrated in the figures herein, may be arranged and designed in a variety of different configurations. Thus, the following detailed description of the embodiments of the present application provided in the figures is not intended to limit the scope of the claimed application, but is merely representative of selected embodiments of the application.

At present, the UAV monitoring and control both use a single monitoring terminal and a control terminal, where the multi-terminal monitoring of the UAV cannot realized, and only one terminal can control the UAV, resulting in inflexible systems and inconvenient operations by operators, and thus the need for monitoring and controlling the UAV through multiple terminals cannot met. Based on this, the present disclosure provides a UAV control system and a UAV control method, to meet the need for monitoring and controlling the UAV through multiple terminals.

In the present disclosure, multi-terminal control of a UAV refers to that multiple terminals have the ability to control the same UAV, but at the same time, only one terminal has the authority to control the UAV. For example, in the UAV control system, there are three terminals comprising terminal A, terminal B, and terminal C, all three terminals have the ability to control the same UAV, but at a certain moment, when the terminal A has the authority to control the UAV, the terminal B and the terminal C do not have the authority to control the UAV; if it is desired to make the terminal B have the authority to control the UAV, then firstly the authority to control the UAV needs to be transferred to the terminal B, so that the terminal B has the authority, while the terminal A loses the control authority.

To facilitate understanding of the present embodiment, firstly, a UAV control system disclosed in the embodiments of the present disclosure is described in details. The UAV control system provided in the embodiments of the present disclosure is configured for multi-terminal control and monitoring of the UAV.

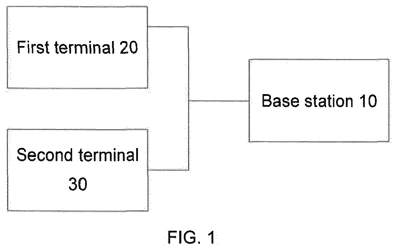

Referring to Fig. 1, the embodiment of the present disclosure provides a UAV control system, the system comprising: a base station 10, a first terminal 20, and a second terminal 30;
the first terminal 20 and the second terminal 30 are respectively in communication with the base station;
the first terminal 20 is configured to generate a UAV control request, and send the UAV control request to the base station; and
the base station 10 is configured to receive the UAV control request sent by the first terminal 20, determine, in accordance with the UAV control request and the current state of the second terminal 30 saved in the base station, whether the first terminal 20 has the priority control authority to control the UAV, and enabling, when it is determined that the first terminal 20 has the priority control authority to control the UAV, the accessibility of the first terminal 20 to the control authority on the UAV.

In a specific implementation, the first terminal 20 refers to a terminal that has the ability to control the UAV but currently does not yet have the control authority over the UAV. The second terminal 30 refers to one or multiple other terminal(s) other than the first terminal 20 that is/are connected to the base station. When there are multiple second terminals 30, after receiving the UAV control request sent by the first terminal 20, the base station determines in sequence whether each second terminal 30 has the control authority over the UAV, or the base station will determine whether there is currently any second terminal having the control authority on the UAV, according to the state information of the second terminals recorded by itself and the terminal identifier indicating the control authority on the UAV.

In the UAV control system provided by the present disclosure, the control of the terminals to the UAV has exclusiveness. When the base station receives the UAV control request sent by the first terminal, it will detect whether there are other second terminals currently controlling the UAV, that is, the base station needs to determine the UAV to be controlled by the first terminal and whether the first terminal has the authority to control the UAV to be controlled thereby, wherein if the first terminal has the authority to control the UAV to be controlled thereby, the authority to control the UAV will be transferred to the first terminal, to avoid the information execution disorder of the UAV resulted by receiving multi-control information when multiple terminals perform control on the UAV.

Specifically, the base station in the present disclosure determines whether the first terminal has the priority control authority to control the UAV corresponding to the UAV identifier by the following steps:
detecting, according to the current state of the second terminal, whether the accessibility of the second terminal to the control authority on the UAV is enabled,
wherein if not, it is determined that the first terminal has the priority control authority on the UAV; and
if yes, it is detected whether the priority of the first terminal is higher than the priority of the second terminal,
wherein if the priority of the first terminal is higher than the priority of the second terminal, it is determined that the first terminal has the priority control authority on the UAV.

Upon the specific implementation, the current state of the second terminal refers to the current authority which the second terminal has, wherein the current authority which the second terminal has may have the following types: having only the authority to monitor the UAV, that is, only the UAV monitoring data can be obtained from the base station; not only the authority to monitor the UAV, but also the authority to control the UAV, that is, it can both obtain the UAV monitoring data from the base station and send by the base station the UAV control instruction to the UAV, to control the specific operation of the UAV.

The base station will record the current state of each of terminals. After it receives the UAV control request sent by the first terminal, it is detected whether there is a second terminal currently controlling the UAV according to the current state of the second terminals.

If there is a second terminal currently controlling the UAV, it is detected whether the priority of the first terminal is higher than the priority of the second terminal. There are different operations regarding different results.

First: the priority of the first terminal is higher than the priority of the second terminal, then it is directly determined that the first terminal has the priority control authority on the UAV.

Currently, when the base station determines that the first terminal has the priority control authority on the UAV, it will enable the accessibility of the first terminal to the control authority on the UAV, meanwhile reclaim the control authority of the second terminal on the UAV, so that only one terminal can control the UAV at a time.

It should be noticed that in this case, since the priority of the first terminal is higher than the priority of the second terminal, consent of the second terminal is actually unnecessary to transfer the control authority on the UAV from the second terminal to the first terminal. After the base station transfers the control authority on the UAV from the second terminal to the first terminal, it sends a control authority transfer notification to the second terminal that previously has the control authority on the UAV, to notify the second terminal that the control authority is transferred to the first terminal. In addition, the control authority transfer notification may also be sent to other second terminals other than this very second terminal, so that all the terminals in the terminal trunk will be notified the current UAV control situation.

Second: the priority of the first terminal is not higher than the priority of the second terminal.

Since the priority of the first terminal and the priority of the second terminal are equivalent, or the priority of the first terminal is lower than the priority of the second terminal, the first terminal needs to request the consent of the second terminal when intending to obtain the control authority on the UAV.

Upon receiving the UAV control request sent by the first terminal, the base station sends a control authority transfer request to the second terminal having the UAV control authority. After receiving the control authority transfer request sent by the base station, the second terminal prompts an operator using the second terminal for the transfer request, wherein if the operator consents that the control authority on the UAV is transferred to the first terminal, the second terminal will feed back transfer consent information to the base station; and after receiving the transfer consent information fed back by the second terminal, the base station determines that the first terminal has the priority control authority on the UAV, reclaim the control authority of the second terminal on the UAV, and enables the accessibility of the first terminal to the control authority on the UAV. If the operator does not consent that the control authority on the UAV is transferred to the first terminal, the second terminal will feed back transfer rejection information to the base station; and after receiving the transfer rejection information fed back by the second terminal, the base station sends a transfer rejection instruction to the first terminal, so that the UAV control request sent by the first terminal is rejected, and the first terminal cannot obtain the authority to control the UAV.

In addition, there is also a situation that when the second terminal has a problem and cannot communicate with the base station, actually the second terminal has the authority to control the UAV, but the control person cannot use the second terminal to control the UAV. Thus, even if the priority of the first terminal is not higher than the priority of the second terminal, the control authority on the UAV still needs to be transferred to the first terminal. Currently, the base station is further configured to detect whether a control instruction of the second terminal to the UAV is received within a preset period of time, upon detecting that the priority of the first terminal is not higher than the priority of the second terminal; and determine, if the control instruction of the second terminal to the UAV is not yet received within the preset period of time, the priority control authority of the first terminal to the UAV, and reclaim the control authority of the second terminal on the UAV; and enable the accessibility of the first terminal to the control authority on the UAV.

Here, that the control instruction of the second terminal to the UAV is not received within the preset period of time refers to that from the time when the UAV control request sent by the first terminal is received to the moment when the time reaches the preset period of time, no control instruction of the UAV is received; or that from the time when the control request sent by the second terminal is received to the moment when the time reaches the preset period of time, no control instruction of the UAV is received.

If the base station does not receive the control instruction sent by the second terminal for a long time, the second base station is then considered to have a problem. Therefore in this case, when the first terminal requests the control authority on the UAV, regardless whether the priority of the first terminal is higher than the priority of the second terminal, the control authority of the second terminal will be reclaimed, and the accessibility of the first terminal to the control authority on the UAV will be enabled.

In addition, when it is detected that the control instruction of the second terminal to the UAV is not received within a preset period of time, the base station may also send a probe message to the second terminal, and only if a feedback message corresponding to the probe message is not received, the control authority on the UAV is transferred to the first terminal.

The embodiment of the present disclosure provides a UAV control system, comprising: a base station, a first terminal, and a second terminal. When the first terminal needs to acquire the control authority on the UAV, it will send a UAV control request to the base station; and the base station enables accessibility of the first terminal to the control authority on the UAV, only after receiving the UAV control request sent by the first terminal and after determining according to the current state of the second terminal whether the first terminal has the priority control authority to control the UAV. Therefore through this process, based on the priority control authority of the terminals, transferring of the control authority on the UAV between the multiple terminals is achieved, meeting the need of the multi-terminal control of the UAV.

In another embodiment of the present disclosure, the first terminal 20 is further configured to generate a UAV monitoring request, and send the UAV monitoring request to the base station 10; and receive the UAV state information returned by the base station 10 according to the UAV monitoring request; and
the base station 10 is further configured to receive a UAV monitoring request sent by the first terminal 20, and return the UAV state information of the UAV to the first terminal 20 according to the UAV monitoring request.

In a specific implementation, when the first terminal needs to monitor the UAV, a UAV monitoring request is generated and sent to the base station. After receiving the UAV monitoring request, the base station sends corresponding UAV state information returned by the UAV to the first terminal.

It should be noticed here that the base station will obtain the UAV state information when the UAV performs data interaction. If the first terminal does not have a request for monitoring the UAV, and meanwhile does not have the authority to control the UAV, the first terminal will not receive the UAV state information. When the UAV has the authority to control the UAV, although it does not have a request for monitoring the UAV, the UAV state information will be sent to the first terminal, in order to enable the operator to control the UAV based on the current state of the UAV. When the first terminal does not have the authority to control the UAV but sends a UAV monitoring request to the base station, the base station will send UAV state information to the first terminal according to the UAV monitoring request.

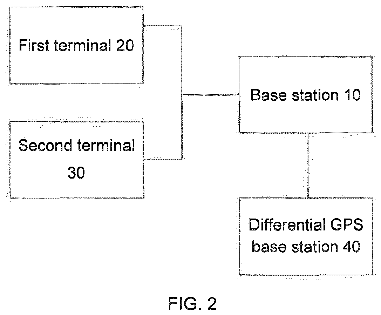

See Fig.2, in another embodiment of the present disclosure, a differential global positioning system (GPS) base station 40 is also comprised.

The differential GPS base station 40, is configured to acquire the base station positioning data sent by a satellite; perform a difference on the real position data of the differential GPS base station and the base station positioning data to obtain a position difference term, and send the position difference term to the base station.

The base station is further configured to receive the position difference term sent by the differential GPS base station and the UAV position information transmitted by the UAV; and generate UAV real position information according to the position difference term and the UAV position information.

In the specific implementation, due to effects of various factors such as the rotation of the earth, the external magnetic field, the transmission medium of radio waves, the accuracy of the satellite and so on, the position of the UAV obtained through the GPS is thereby usually inaccurate, with a certain error existing between it and the real position of the UAV. The role of the differential GPS base station 40 is to be able to obtain this error through the base station positioning data transmitted by the satellite and the real position data of the differential GPS base station 40. The error is also the position difference term in the present disclosure, which equals to the difference between the base station positioning data and the real position data. After obtaining the position difference term, the differential GPS base station 40 will be able to send the position difference term to the base station 10. The base station can receive the UAV position information of the UAV from the UAV, and use the UAV position information as well as the position difference term to calculate the real position information of the UAV, so as to obtain the accurate position data of the UAV.

It should be noticed here that the UAV is equipped with a differential GPS mobile station, which is configured to obtain the UAV position information. Also, the base station positioning data and the UAV positioning data are related data generated by one same satellite.

Based on the same inventive concept, the embodiment of the present disclosure also provides a UAV control method corresponding to the UAV control system. Since the principle of the UAV control method in the embodiment of the present disclosure that solves the problem is similar to that of the UAV control system of the embodiment of the present disclosure, the implementation of the UAV control method can be seen in the implementation of the UAV control system, and the repetition will not be repeated.

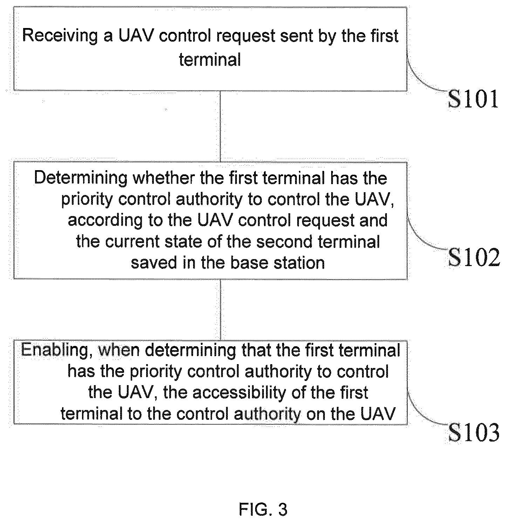

Referring to Fig. 3, the present disclosure provides a UAV control method, which includes Steps S101-S103, specifically as follows:
S101: receiving a UAV control request sent by the first terminal;
S102: determining whether the first terminal has the priority control authority to control the UAV, according to the UAV control request and the current state of the second terminal saved in the base station; and
S103: enabling, upon determining that the first terminal has the priority control authority to control the UAV, the accessibility of the first terminal to the control authority on the UAV.

The base station detects whether the current state of the second terminal is in the state of controlling the UAV, or whether it is in the state of monitoring the UAV. If the second terminal is in a controlling state for the UAV and the first terminal needs to control the UAV, the base station determines that the accessibility of the second terminal to the control authority on the UAV can be enabled: that is, the priority of the first terminal to the control authority on the UAV is higher than the priority of the second terminal to the control authority on the UAV, and meanwhile it determines that the first terminal has the control authority on the UAV.

In the UAV control method provided by the embodiment of the present disclosure, after receiving the UAV control request sent by the first terminal, the base station determines whether the first terminal has the priority control authority to control the UAV according to the current state of the second terminal, and then enables the accessibility of the first terminal to the control authority on the UAV. Therefore through this process, transferring the UAV control authority between the multiple terminals based on the priority control authority of the terminals is realized, and the need of the multi-terminal control of the UAV is met.

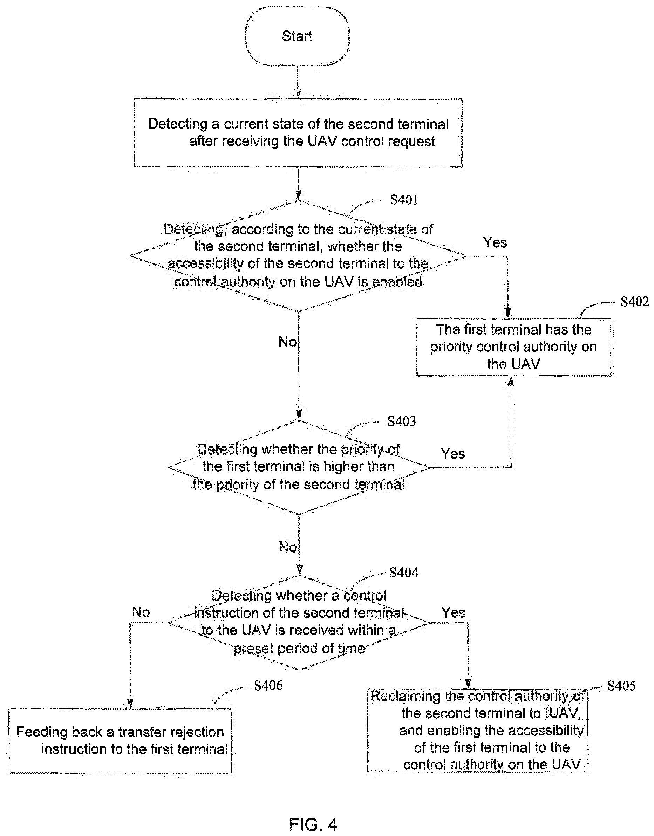

Optionally, referring to Fig 4, the UAV control method provided in the embodiment of the present disclosure further includes: determining whether the first terminal has the priority control authority to control the UAV, and specifically includes:
S401: detecting, according to the current state of the second terminal, whether the accessibility of the second terminal to the control authority on the UAV is enabled, wherein if not, S402 is performed, and if yes, S403 is performed;
S402: determining that the first terminal has the priority control authority on the UAV;
S403: detecting whether the priority of the first terminal is higher than the priority of the second terminal, wherein if yes, S402 is performed, and if not, 404 is performed;
S404: detecting whether a control instruction of the second terminal to the UAV is received within a preset period of time, wherein If yes, S405 is performed; and if not, S406 is performed;
S405: reclaiming the control authority of the second terminal on the UAV, and enabling the accessibility of the first terminal to the control authority on the UAV; and
S406: feeding back a transfer rejection instruction to the first terminal.

When the base station determines that the priority of the second terminal to the control authority on the UAV is higher than the priority of the first terminal to the control authority on the UAV, that is, the priority of the second terminal to the control authority on the UAV is higher than the priority of the first terminal to the control authority, the base station needs to further detect whether the second terminal sends a UAV control instruction to the base station within a specified time, wherein if not, it is then considered that the second terminal currently has a problem and cannot control the UAV, thus whether the priority of the second terminal to the control authority on the UAV is higher than the priority of the first terminal to the control authority or not, the authority to control the UAV of the second terminal is reclaimed all the same, and meanwhile the first terminal obtains the authority to control the UAV.

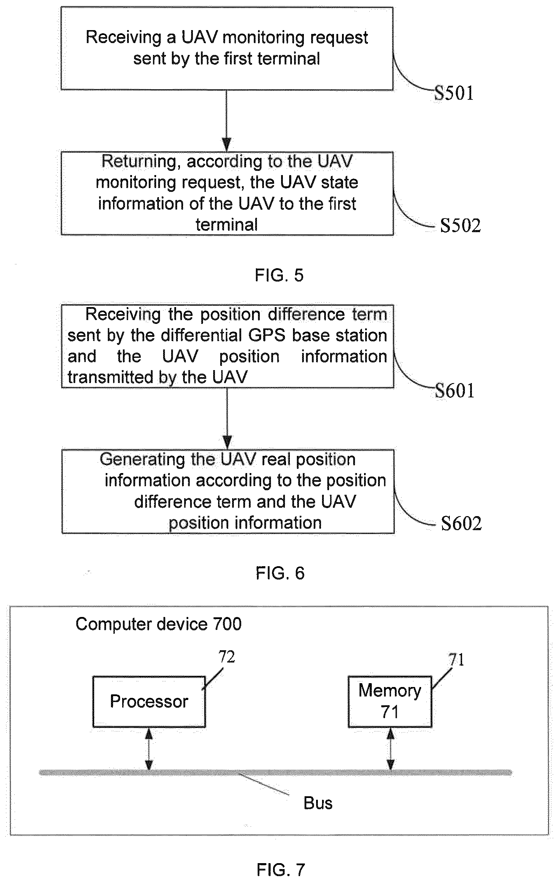

Optionally: referring to Fig.5, the UAV control method provided in the embodiment of the present disclosure further includes:
S501: receiving a UAV monitoring request sent by the first terminal; and
S502: returning, according to the UAV monitoring request, the UAV state information of the UAV to the first terminal.

Optionally: referring to Fig.6, the UAV control method provided in the embodiment of the present disclosure further includes:
S601: receiving the position difference term sent by the differential GPS base station and the UAV position information transmitted by the UAV; and
S602: generating the UAV real position information according to the position difference term and the UAV position information.

Corresponding to the UAV control method in Fig.3, the embodiment of the present disclosure further provides a computer device 700, as shown in Fig.7. The device includes a memory 71, a processor 72, and computer programs stored in the memory 71 and operable on the processor 72, wherein the processor 72 implements the steps of the UAV control method when running the computer programs.

Specifically, the memory 71 and the processor 72 can be general-purpose memory and processor, which are not specifically limited herein. When the processor 72 runs the computer programs stored in the memory 71, the UAV control method can be implemented, so as to solve the problem that one UAV can only be controlled by one terminal in the prior art, and achieve the effect of multi-terminal control of a UAV.

In the UAV control method, the embodiment of the present disclosure further provides a computer-readable storage medium, which stores the computer programs that are run by the processor to implement the steps of the UAV control method.

Specifically, the storage medium can be a general-purpose storage medium, such as a removable disk, a hard disk, etc. When the computer programs in the storage medium is run, the UAV control method can be implemented, thus solving the problem that one UAV can only be controlled by one terminal in the prior art, and achieving the effect of multi-terminal control of a UAV.

The computer program product of the UAV control system and the UAV control method provided in the embodiments of the present disclosure includes a computer-readable storage medium storing program codes, wherein the program codes include instructions for implementation of methods in the foregoing method embodiments. For the specific implementation, reference can be made to the method embodiments, and details are not described herein again.

Persons skilled in the art may clearly understand that for convenience and brevity of description, specific working processes of the above-described system and apparatus may refer to a corresponding process in the foregoing method embodiments, and details are not described herein again.

The functions, if implemented in the form of software functional units and sold or used as a stand-alone product, may be stored in a computer-readable storage medium. Based on such understanding, the technical solution of the present disclosure or the part that contributes to the prior art or the part of the technical solution can be embodied in the form of a software product stored in one storage medium, including a number of instructions that are used to enable a computer device (which may be a personal computer, a server, or a network device, etc.) to perform all or part of the steps of the methods described in the various embodiments of the present disclosure. The foregoing storage medium includes: a U disk, a removable hard disk, a read-only memory (ROM), a random access memory (RAM), a magnetic disk, an optical disk, or any other medium that can store program codes.

The foregoing descriptions are merely specific embodiments of the present disclosure, but the protection scope of the present disclosure is not limited thereto. Therefore, the protection scope of the present disclosure should be subject to the protection scope of the claims.

## Claims

1. An unmanned-aerial-vehicle, UAV, control system comprising:
a base station (10);
a first terminal (20); and
a second terminal (30),
wherein the first terminal (20) and the second terminal (30) are respectively in communication with the base station (10),
wherein the first terminal (20) is configured to generate a UAV control request and send the UAV control request to the base station (10),
wherein the base station (10) is configured to receive the UAV control request sent by the first terminal (20), determine, in accordance with the UAV control request and a current state of the second terminal (30) saved in the base station (10), whether the first terminal (20) has a priority control authority for controlling a UAV, and enable, when determining that the first terminal (20) has the priority control authority for controlling the UAV, accessibility of the first terminal (20) to a control authority on the UAV,
wherein the base station (10) is configured to determine whether the first terminal (20) has the priority control authority for controlling the UAV by being configured to:
detect, according to the current state of the second terminal (30), whether the second terminal (30) has accessibility to the control authority on the UAV,
wherein if not, the base station (10) is configured to determine that the first terminal (20) has the priority control authority on the UAV, and
if yes, the base station (10) is configured to detect whether a priority of the first terminal (20) is higher than a priority of the second terminal (30),
wherein if the priority of the first terminal (20) is higher than the priority of the second terminal (30), the base station (10) is configured to determine that the first terminal (20) has the priority control authority on the UAV,
**characterised in that**
if the priority of the first terminal (20) is equivalent to or lower than the priority of the second terminal (30):
the base station (10) is configured to send a control authority transfer request to the second terminal; and
the second terminal (30) is configured, after receiving the control authority transfer request sent by the base station (10), to prompt an operator using the second terminal (30) for the control authority transfer request and to feed back transfer consent information to the base station (10) if the operator consents that the control authority on the UAV is transferred to the first terminal (20) and to feed back transfer rejection information to the base station (10) if the operator does not consent that the control authority on the UAV is transferred to the first terminal (20); and
the base station (10) is configured to receive the transfer consent information or the transfer rejection information from the second terminal (30); and
the base station (10) is configured, after receiving the transfer consent information, to determine that the first terminal (20) has the priority control authority on the UAV, to reclaim the control authority of the second terminal (30) on the UAV, and to enable the accessibility of the first terminal (20) to the control authority on the UAV; and
the base station (10) is configured, after receiving the transfer rejection information, to send a transfer rejection instruction to the first terminal (20), so that the UAV control request sent by the first terminal (10) is rejected.

2. The system of claim 1, wherein the base station (10) is further configured to detect, when detecting that the priority of the first terminal (20) is not higher than the priority of the second terminal (30), whether a control instruction of the second terminal (30) to the UAV is received within a preset period of time,
wherein if the control instruction of the second terminal (30) to the UAV is not received within the preset period of time, the control authority of the second terminal (30) on the UAV is reclaimed, and the first terminal (20) has the accessibility to the control authority on the UAV.

3. The system of claim 2, wherein the preset period of time starts at a time when the UAV control request sent by the first terminal (20) is received or at a time when a control request sent by the second terminal (30) is received.

4. The system of claim 2 or 3, wherein the base station (10), when it detects that the control instruction of the second terminal (30) to the UAV is not received within the preset period of time, is configured to send a probe message to the second terminal (30), and only if a feedback message corresponding to the probe message is not received, transfer control authority on the UAV to the first terminal (20).

5. The system of any one of claims 1 to 4, wherein the base station (10) is configured to send UAV state information of the UAV to the first terminal (20) only if the first terminal (20) has authority to control the UAV and/or a UAV monitoring request is received by the base station (10) from the first terminal (20).

6. The system of any one of claims 1 to 5, further comprising a differential global positioning system, GPS, base station (40),
wherein the differential GPS base station (40) is configured to acquire base station positioning data sent by a satellite, acquire a difference between real position data of the differential GPS base station and base station positioning data to obtain a position difference term, and send the position difference term to the base station (10); and
the base station (10) is further configured to receive the position difference term sent by the differential GPS base station (40) and UAV position information transmitted by the UAV, and generate UAV real position information according to the position difference term and the UAV position information.

7. An unmanned-aerial-vehicle, UAV, control method used for a base station (10) in a UAV control system, the method comprising:
receiving a UAV control request sent by a first terminal (20);
determining whether the first terminal (20) has a priority control authority for controlling a UAV, according to the UAV control request and a current state of a second terminal (30) saved in the base station; and
enabling, when determining that the first terminal (20) has the priority control authority for controlling the UAV, accessibility of the first terminal (20) to a control authority on the UAV,
wherein the determining whether the first terminal (20) has a priority control authority for controlling the UAV comprises:
detecting, according to the current state of the second terminal (30), whether the second terminal (30) has accessibility to the control authority on the UAV,
wherein if not, it is determined that the first terminal (20) has the priority control authority on the UAV; and
if yes, it is detected whether the priority of the first terminal (20) is higher than the priority of the second terminal (30),
wherein if the priority of the first terminal (20) is higher than the priority of the second terminal (30), it is determined that the first terminal (20) has the priority control authority on the UAV,
**characterised in that**
if the priority of the first terminal (20) is equivalent to or lower than the priority of the second terminal (30), the base station (10) sends a control authority transfer request to the second terminal, the second terminal (30), after receiving the control authority transfer request sent by the base station (10), prompts an operator using the second terminal (30) for the control authority transfer request and feed backs transfer consent information to the base station (10) if the operator consents that the control authority on the UAV is transferred to the first terminal (20) and feed backs transfer rejection information to the base station (10) if the operator does not consent that the control authority on the UAV is transferred to the first terminal (20), the base station (10) receives the transfer consent information or the transfer rejection information from the second terminal (30), the base station (10), after receiving the transfer consent information, determines that the first terminal (20) has the priority control authority on the UAV, reclaims the control authority of the second terminal (30) on the UAV, and enables the accessibility of the first terminal (20) to the control authority on the UAV, the base station (10), after receiving the transfer rejection information, sends a transfer rejection instruction to the first terminal (20), so that the UAV control request sent by the first terminal (10) is rejected.

8. The method of claim 7, comprising detecting, when detecting that the priority of the first terminal is not higher than the priority of the second terminal, whether a control instruction of the second terminal to the UAV is received within a preset period of time,
wherein if the control instruction of the second terminal to the UAV is not received within the preset period of time, the control authority of the second terminal on the UAV is reclaimed, and the accessibility of the first terminal to the control authority on the UAV is enabled.

9. The method of claim 8, wherein the preset period of time starts at a time when the UAV control request sent by the first terminal (20) is received or at a time when a control request sent by the second terminal (30) is received.

10. The method of claim 8 or 9, wherein, when it is detected that the control instruction of the second terminal (30) to the UAV is not received within the preset period of time, a probe message is sent to the second terminal (30), and only if a feedback message corresponding to the probe message is not received, the control authority on the UAV is transferred to the first terminal (20).

11. The method of any one of claims 7 to 10, comprising sending UAV state information of the UAV to the first terminal (20) only if the first terminal (20) has authority to control the UAV and/or a UAV monitoring request is received by the base station (10) from the first terminal (20).

12. The method of any one of claims 7 to 11, comprising:
receiving a position difference term sent by a differential global positioning system, GPS, base station and UAV position information transmitted by the UAV; and
generating UAV real position information according to the position difference term and the UAV position information.

## Patentansprüche

1. Steuersystem für ein unbemanntes Luftfahrzeug (unmanned-aerial-vehicle, UAV), umfassend:
eine Basisstation (10);
ein erstes Endgerät (20); und
ein zweites Endgerät (30),
wobei das erste Endgerät (20) und das zweite Endgerät (30) jeweils in Kommunikation mit der Basisstation (10) stehen,
wobei das erste Endgerät (20) so konfiguriert ist, dass es eine UAV-Steuerungsanforderung erzeugt und die UAV-Steuerungsanforderung an die Basisstation (10) sendet,
wobei die Basisstation (10) so konfiguriert ist, dass sie die von dem ersten Endgerät (20) gesendete UAV-Steuerungsanforderung empfängt, wobei die Basisstation so konfiguriert ist, dass sie in Übereinstimmung mit der UAV-Steuerungsanforderung und einem in der Basisstation (10) gespeicherten aktuellen Zustand des zweiten Endgeräts (30) feststellt, ob das erste Endgerät (20) eine vorrangige Steuerungsbefugnis zur Steuerung einer UAV hat, wobei die Basisstation so konfiguriert ist, dass sie die Zugänglichkeit des ersten Endgeräts (20) zu einer Steuerungsbefugnis auf dem UAV ermöglichen, wenn sie bestimmt, dass das erste Endgerät (20) die vorrangige Steuerungsbefugnis auf dem UAV hat,
wobei die Basisstation (10) so konfiguriert ist, dass sie bestimmt, ob das erste Endgerät (20) die vorrangige Steuerungsbefugnis zur Steuerung des UAV hat, indem sie so konfiguriert ist, dass sie:
anhand des aktuellen Zustands des zweiten Endgeräts (30) erkennt, ob das zweite Endgerät (30) die Zugänglichkeit zu einer Steuerungsbefugnis auf dem UAV hat, wobei, falls nicht, die Basisstation (10) so konfiguriert ist, dass sie feststellt, dass das erste Endgerät (20) die vorrangige Steuerungsbefugnis auf dem UAV hat, und
wobei, falls ja, die Basisstation (10) so konfiguriert ist, dass sie erkennt, ob eine Priorität des ersten Endgerätes (20) höher als eine Priorität des zweiten Endgerätes (30) ist,
wobei, wenn die Priorität des ersten Endgeräts (20) höher als die Priorität des zweiten Endgeräts (30) ist, die Basisstation (10) so konfiguriert ist, dass sie feststellt, dass das erste Endgerät (20) die vorrangige Steuerungsbefugnis auf dem UAV hat,
**dadurch gekennzeichnet,**
**dass** die Basisstation (10) so konfiguriert ist, dass sie eine Steuerungsbefugnisübertragungsanforderung an das zweite Endgerät sendet, wenn die Priorität des ersten Endgeräts (20) gleich oder niedriger als die Priorität des zweiten Endgeräts (30) ist, und
**dass** das zweite Endgerät (30) so konfiguriert ist, dass es nach dem Empfang der von der Basisstation (10) gesendeten Steuerungsbefugnisübertragungsanforderung einen Bediener, der das zweite Endgerät (30) verwendet, zur Steuerungsbefugnisübertragungsanforderung auffordert und Übertragungszustimmungsinformationen an die Basisstation (10) zurückmeldet, wenn der Bediener zustimmt, dass die Steuerungsbefugnis auf dem UAV an das erste Endgerät (20) übertragen wird, und dass das zweite Endgerät Übertragungsablehnungsinformationen an die Basisstation (10) zurückmeldet, wenn der Bediener nicht zustimmt, dass die Steuerungsbefugnis auf dem UAV an das erste Endgerät (20) übertragen wird, und
**dass** die Basisstation (10) so konfiguriert ist, dass sie die Übertragungszustimmungsinformation oder die Übertragungsablehnungsinformation von dem zweiten Endgerät (30) empfängt; und
**dass** die Basisstation (10) so konfiguriert ist, dass sie nach dem Empfang der Übertragungszustimmungsinformation feststellt, dass das erste Endgerät (20) die vorrangige Steuerungsbefugnis auf dem UAV hat, die Steuerungsbefugnis des zweiten Endgeräts (30) auf dem UAV zurückfordert und die Zugänglichkeit des ersten Endgeräts (20) zur Steuerungsbefugnis auf dem UAV zu ermöglicht; und
**dass** die Basisstation (10) so konfiguriert ist, dass sie nach dem Empfang der Übertragungsablehnungsinformation eine Übertragungsablehnungsinformation an das erste Endgerät (20) sendet, so dass die vom ersten Endgerät (10) gesendete UAV-Steuerungsanforderung abgelehnt wird.

2. System nach Anspruch 1, wobei die Basisstation (10) ferner so konfiguriert ist, dass sie erkennt, ob eine Steueranweisung des zweiten Endgeräts (30) auf dem UAV innerhalb einer voreingestellten Zeitspanne empfangen wird, wenn sie detektiert, dass die Priorität des ersten Endgeräts (20) nicht höher ist als die Priorität des zweiten Endgeräts (30),
wobei, wenn die Steueranweisung des zweiten Endgeräts (30) auf dem UAV nicht innerhalb der voreingestellten Zeitspanne empfangen wird, die Steuerungsbefugnis des zweiten Endgeräts (30) auf dem UAV zurückgewonnen wird und das erste Endgerät (20) den Zugänglichkeit zur Steuerungsbefugnis auf dem UAV hat.

3. System nach Anspruch 2, wobei die voreingestellte Zeitspanne zu einem Zeitpunkt beginnt, zu dem die vom ersten Endgerät (20) gesendete UAV-Steuerungsanforderung empfangen wird, oder zu einem Zeitpunkt, zu dem eine vom zweiten Endgerät (30) gesendete Steuerungsanforderung empfangen wird.

4. System nach Anspruch 2 oder 3, wobei die Basisstation (10), wenn sie feststellt, dass die Steueranweisung des zweiten Endgeräts (30) auf dem UAV nicht innerhalb der voreingestellten Zeitspanne empfangen wird, so konfiguriert ist, dass sie eine Prüfnachricht an das zweite Endgerät(30) sendet und nur dann, wenn eine der Prüfnachricht entsprechende Rückmeldung nicht empfangen wird, die Steuerungsbefugnis auf dem UAV an das erste Endgerät (20) überträgt.

5. System nach einem der Ansprüche 1 bis 4, wobei die Basisstation (10) so konfiguriert ist, dass sie UAV-Zustandsinformationen des UAV nur dann an das erste Endgerät (20) sendet, wenn das erste Endgerät (20) die Befugnis hat, das UAV zu steuern und/oder eine UAV-Überwachungsanforderung von der Basisstation (10) aus dem ersten Endgerät (20) empfangen wird.

6. System nach einem der Ansprüche 1 bis 5, umfassend ferner eine Differential-GPS-Basisstation (40),
wobei die Differential-GPS-Basisstation(40) so konfiguriert ist, dass sie von einem Satelliten gesendete Basisstations-Positionsdaten erfasst, eine Differenz zwischen realen Positionsdaten der Differential-GPS-Basisstation und Basisstations-Positionsdaten erfasst, um einen Positionsdifferenztenn zu erhalten, und den Positionsdifferenzterm an die Basisstation (10) sendet, und
die Basisstation (10) ferner so konfiguriert ist, dass sie den von der Differential-GPS-Basisstation (40) gesendeten Positionsdifferenzterm und die von dem UAV gesendeten UAV-Positionsinformationen empfängt und reale UAV-Positionsinformationen entsprechend dem Positionsdifferenztenn und den UAV-Positionsinformationen erzeugt.

7. Verfahren zur Steuerung eines unbemannten Luftfahrzeugs (UAV), das für eine Basisstation (10) in einem UAV-Steuersystem verwendet wird, wobei das Verfahren umfasst:
Empfangen einer von einem ersten Endgerät (20) gesendeten UAV-Steuerungsanforderung;
Bestimmen, ob das erste Endgerät (20) eine vorrangige Steuerungsbefugnis zur Steuerung eines UAV hat, entsprechend der UAV-Steuerungsanforderung und einem aktuellen Zustand eines zweiten Endgeräts (30), das in der Basisstation gespeichert ist, und
Ermöglichung, wenn bestimmt wird, dass das erste Endgerät (20) die vorrangige Steuerungsbefugnis zur Steuerung des UAV hat, der Zugänglichkeit des ersten Endgeräts (20) zu einer Steuerungsbefugnis auf dem UAV,
wobei das Bestimmen, ob das erste Endgerät (20) eine vorrangige Steuerungsbefugnis zur Steuerung des UAV hat, Folgendes umfasst:
Erkennen, entsprechend dem aktuellen Zustand des zweiten Endgeräts (30), ob das zweite Endgerät (30) Zugänglichkeit auf die Steuerungsbefugnis auf dem UAV hat, wobei, falls dies nicht der Fall ist, bestimmt wird, dass das erste Endgerät (20) die vorrangige Steuerungsbefugnis auf dem UAV hat, und
wenn ja, wird bestimmt, ob die Priorität des ersten Endgeräts (20) höher als die Priorität des zweiten Endgeräts (30) ist,
wobei, wenn die Priorität des ersten Endgeräts (20) höher als die Priorität des zweiten Endgeräts (30) ist, bestimmt wird, dass das erste Endgerät (20) die vorrangige Steuerungsbefugnis auf dem UAV hat,
**dadurch gekennzeichnet,**
**dass** die Basisstation (10) eine Steuerungsbefugnisübertragungsanforderung an das zweite Endgerät sendet, wenn die Priorität des ersten Endgeräts (20) gleich oder niedriger als die Priorität des zweiten Endgeräts (30) ist, und dass das zweite Endgerät (30) nach dem Empfang der von der Basisstation (10) gesendeten Steuerungsbefugnisübertragungsanforderung einen Bediener, der das zweite Endgerät (30) verwendet, zur Steuerungsbefugnisübertragungsanforderung auffordert und Übertragungszustimmungsinformationen an die Basisstation (10) zurückmeldet, wenn der Bediener zustimmt, dass die Steuerungsbefugnis auf dem UAV an das erste Endgerät (20) übertragen wird, und dass das zweite Endgerät Übertragungsablehnungsinformationen an die Basisstation (10) zurückmeldet, wenn der Bediener nicht zustimmt, dass die Steuerungsbefugnis auf dem UAV an das erste Endgerät (20) übertragen wird, und dass die Basisstation (10) die Übertragungszustimmungsinformation oder die Übertragungsablehnungsinformation von dem zweiten Endgerät (30) empfängt; und dass die Basisstation (10) nach dem Empfang der Übertragungszustimmungsinformation feststellt, dass das erste Endgerät (20) die vorrangige Steuerungsbefugnis auf dem UAV hat, die Steuerungsbefugnis des zweiten Endgeräts (30) auf dem UAV zurückfordert und die Zugänglichkeit des ersten Endgeräts (20) zur Steuerungsbefugnis auf dem UAV ermöglicht; und dass die Basisstation (10) nach dem Empfang der Übertragungsablehnungsinformation eine Übertragungsablehnungsinformation an das erste Endgerät (20) sendet, so dass die vom ersten Endgerät (20) gesendete UAV-Steuerungsanforderung abgelehnt wird.

8. Verfahren nach Anspruch 7, umfassend das Erkennen, wenn erkannt wird, dass die Priorität des ersten Endgeräts nicht höher als die Priorität des zweiten Endgeräts ist, ob eine Steueranweisung des zweiten Endgeräts auf dem UAV innerhalb einer vorgegebenen Zeitspanne empfangen wird,
wobei, wenn die Steueranweisung des zweiten Endgeräts (30) auf dem UAV nicht innerhalb der voreingestellten Zeitspanne empfangen wird, die Steuerungsbefugnis des zweiten Endgeräts (30) auf dem UAV zurückgewonnen wird und das erste Endgerät (20) den Zugänglichkeit zur Steuerungsbefugnis auf dem UAV hat.

9. Verfahren nach Anspruch 8, wobei die voreingestellte Zeitspanne zu einem Zeitpunkt beginnt, zu dem die vom ersten Endgerät (20) gesendete UAV-Steuerungsanforderung empfangen wird, oder zu einem Zeitpunkt, zu dem eine vom zweiten Endgerät (30) gesendete Steuerungsanforderung empfangen wird.

10. Verfahren nach Anspruch 8 oder 9, wobei, wenn feststellt wird, dass die Steueranweisung des zweiten Endgeräts (30) auf dem UAV nicht innerhalb der voreingestellten Zeitspanne empfangen wird, eine Prüfnachricht an das zweite Endgerät(30) gesendet wird, und nur dann, wenn eine der Prüfnachricht entsprechende Rückmeldung nicht empfangen wird, die Steuerungsbefugnis auf dem UAV an das erste Endgerät (20) überträgt wird.

11. Verfahren nach einem der Ansprüche 7 bis 10, umfassend das Senden von UAV-Zustandsinformationen des UAV an das erste Endgerät (20) nur dann, wenn das erste Endgerät (20) die Befugnis hat, das UAV zu steuern und/oder eine UAV-Überwachungsanforderung von der Basisstation (10) aus dem ersten Endgerät (20) empfangen wird.

12. Verfahren nach einem der Ansprüche 7 bis 11, umfassend das Empfangen von Positionsdifferenzterm, der von einem Differential-GPS-Basisstation (40) gesendet wird, und von UAV-Positionsinformationen, die von dem UAV gesendet werden; und Erzeugen von realen UAV-Positionsinformationen entsprechend dem Positionsdifferenzterm und den UAV-Positionsinformationen.

## Revendications

1. Système de commande pour un aéronef sans pilote (unmanned-aerial-vehicle, UAV), comprenant :
une station de base (10) ;
un premier terminal (20) ; et
un second terminal (30),
dans lequel le premier terminal (20) et le second terminal (30) sont respectivement en communication avec la station de base (10),
dans lequel le premier terminal (20) est configuré pour générer une demande de commande d'UAV et envoyer la demande de commande d'UAV à la station de base (10),
dans lequel la station de base (10) est configurée pour recevoir la demande de commande d'UAV envoyée par le premier terminal (20), déterminer, en fonction de la demande de commande d'UAV et d'un état actuel du second terminal (30) enregistré dans la station de base (10), si le premier terminal (20) a une autorité de commande prioritaire pour commander un UAV, et permettre, lorsqu'il est déterminé que le premier terminal (20) a l'autorité de commande prioritaire pour commander l'UAV, au premier terminal (20) d'avoir accès à une autorité de commande sur l'UAV,
dans lequel la station de base (10) est configurée pour déterminer si le premier terminal (20) a l'autorité de commande prioritaire pour commander l'UAV en étant configuré pour :
détecter, en fonction de l'état actuel du second terminal (30), si le second terminal (30) a accès à l'autorité de commande sur l'UAV,
dans lequel, sinon, la station de base (10) est configurée pour déterminer que le premier terminal (20) a l'autorité de commande prioritaire sur l'UAV, et
si oui, la station de base (10) est configurée pour détecter si une priorité du premier terminal (20) est supérieure à une priorité du second terminal (30),
dans lequel, si la priorité du premier terminal (20) est supérieure à la priorité du second terminal (30), la station de base (10) est configurée pour déterminer que le premier terminal (20) a l'autorité de commande prioritaire sur l'UAV,
**caractérisé en ce que**,
si la priorité du premier terminal (20) est équivalente ou inférieure à la priorité du second terminal (30) :
la station de base (10) est configurée pour envoyer une demande de transfert d'autorité de commande au second terminal ; et
le second terminal (30) est configuré pour, une fois reçu la demande de transfert d'autorité de commande envoyée par la station de base (10), avertir un opérateur d'utiliser le second terminal (30) pour la demande de transfert d'autorité de commande, renvoyer des informations de consentement de transfert à la station de base (10) si l'opérateur consent au transfert de l'autorité de commande sur l'UAV au premier terminal (20), et renvoyer des informations de refus de transfert à la station de base (10) si l'opérateur ne consent pas au transfert de l'autorité de commande sur l'UAV au premier terminal (20) ; et
la station de base (10) est configurée pour recevoir les informations de consentement de transfert ou les informations de refus de transfert depuis le second terminal (30) ; et
la station de base (10) est configurée pour, une fois reçu les informations de consentement de transfert, déterminer que le premier terminal (20) a l'autorité de commande prioritaire sur l'UAV, retirer l'autorité de commande du second terminal (30) sur l'UAV et permettre au premier terminal (20) d'avoir accès à l'autorité de commande sur l'UAV ; et
la station de base (10) est configurée pour, une fois reçu les informations de refus de transfert, envoyer une instruction de refus de transfert au premier terminal (20), de sorte que la demande de commande d'UAV envoyée par le premier terminal (10) soit refusée.

2. Système selon la revendication 1, dans lequel la station de base (10) est configurée en outre pour détecter, lors qu'il est détecté que la priorité du premier terminal (20) n'est pas supérieure à la priorité du second terminal (30), si une instruction de commande du second terminal (30) à l'UAV est reçue dans un délai prédéfini,
dans lequel si l'instruction de commande du second terminal (30) à l'UAV n'est pas reçue dans le délai prédéfini, l'autorité de commande du second terminal (30) sur l'UAV est retirée et le premier terminal (20) a accès à l'autorité de commande sur l'UAV.

3. Système selon la revendication 2, dans lequel le délai prédéfini commence à un moment où la demande de commande d'UAV envoyée par le premier terminal (20) est reçue ou à un moment où une demande de commande envoyée par le second terminal (30) est reçue.

4. Système selon la revendication 2 ou 3, dans lequel la station de base (10) est configurée pour, lorsqu'il est détecté que l'instruction de commande du second terminal (30) à l'UAV n'est pas reçue dans le délai prédéfini, envoyer un message de sonde au second terminal (30), et seulement si un message de retour correspondant au message de sonde n'est pas reçu, transférer l'autorité de commande sur l'UAV au premier terminal (20).

5. Système selon l'une quelconque des revendications 1 à 4, dans lequel la station de base (10) est configurée pour envoyer des informations de l'état d'UAV au premier terminal (20) uniquement si le premier terminal (20) a l'autorité de commander l'UAV et / ou une demande de surveillance d'UAV est reçue par la station de base (10) du premier terminal (20).

6. Système selon l'une quelconque des revendications 1 à 5, comprenant en outre une station de base (40) de système de positionnement global différentiel, GPS, dans lequel la station de base de GPS différentielle (40) est configurée pour acquérir des données de positionnement de station de base envoyées par un satellite, acquérir une différence entre des données de position réelle de la station de base GPS différentielle et des données de positionnement de la station de base de sort d'obtenir un terme de différence de position, et envoyer le terme de différence de position à la station de base (10) ; et
la station de base (10) est configurée en outre pour recevoir le terme de différence de position envoyé par la station de base de GPS différentielle (40) et les informations de position d'UAV transmises par l'UAV, et générer des informations de position réelle d'UAV en fonction du terme de différence de position et des informations de position d'UAV.

7. Procédé de commande d'un aéronef sans pilote, UAV, applicable à une station de base (10) dans un système de commande d'UAV, le procédé comprenant : recevoir une demande de commande d'UAV envoyée par un premier terminal (20) ; déterminer si le premier terminal (20) a une autorité de commande prioritaire pour commander un UAV, en fonction de la demande de commande d'UVA et d'un état actuel du second terminal (30) enregistré dans la station de base ; et
permettre, lorsqu'il est déterminé que le premier terminal (20) a l'autorité de commande prioritaire pour commander l'UAV, au premier terminal (20) d'avoir accès à une autorité de commande sur l'UAV,
dans lequel l'étape de déterminer si le premier terminal (20) a une autorité de commande prioritaire pour commander l'UAV comprend :
détecter, en fonction de l'état actuel du second terminal (30), si le second terminal (30) a accès à l'autorité de commande sur l'UAV,
dans lequel, sinon, il est déterminé que le premier terminal (20) a l'autorité de commande prioritaire sur l'UAV ; et
si oui, il est déterminé que la priorité du premier terminal (20) est supérieure à la priorité du second terminal (30),
dans lequel, si la priorité du premier terminal (20) est supérieure à la priorité du second terminal (30), il est déterminé que le premier terminal (20) a l'autorité de commande prioritaire sur l'UAV,
**caractérisé en ce que**,
si la priorité du premier terminal (20) est équivalente ou inférieure à la priorité du second terminal (30), la station de base (10) envoie une demande de transfert d'autorité de commande au second terminal, le second terminal (30), une fois reçu la demande de transfert d'autorité de commande envoyée par la station de base (10),
avertit un opérateur d'utiliser le second terminal (30) pour la demande de transfert d'autorité de commande, et renvoie des informations de consentement de transfert à la station de base (10) si l'opérateur consent au transfert de l'autorité de commande sur l'UAV au premier terminal (20) et renvoie des informations de refus de transfert à la station de base (10) si l'opérateur ne consent pas au transfert de l'autorité de commande sur l'UAV au premier terminal (20), la station de base (10) reçoit les informations de consentement de transfert ou les informations de refus de transfert depuis le second terminal (30), la station de base (10), une fois reçu les informations de consentement de transfert, détermine que le premier terminal (20) a l'autorité de commande prioritaire sur l'UAV, retire l'autorité de commande du second terminal (30) sur l'UAV et permet au premier terminal (20) d'avoir accès à l'autorité de commande sur l'UAV, et la station de base (10), une fois reçu les informations de refus de transfert, envoie une instruction de refus de transfert au premier terminal (20), de sorte que la demande de commande d'UAV envoyée par le premier terminal (10) soit refusée.

8. Procédé selon la revendication 7, comprenant détecter, lors qu'il est détecté que la priorité du premier terminal n'est pas supérieure à la priorité du second terminal, si une instruction de commande du second terminal à l'UAV est reçue dans un
délai prédéfini,
dans lequel si l'instruction de commande du second terminal à l'UAV n'est pas reçue dans le délai prédéfini, l'autorité de commande du second terminal sur l'UAV est retirée et le premier terminal a accès à l'autorité de commande sur l'UAV.

9. Procédé selon la revendication 8, dans lequel le délai prédéfini commence à un moment où la demande de commande d'UAV envoyée par le premier terminal (20) est reçue ou à un moment où une demande de commande envoyée par le second terminal (30) est reçue.

10. Procédé selon la revendication 8 ou 9, dans lequel lorsqu'il est déterminé que l'instruction de commande du second terminal (30) à l'UAV n'est pas reçue dans le délai prédéfini, un message de sonde est envoyé au second terminal (30), et seulement si un message de retour correspondant au message de sonde n'est pas reçu, l'autorité de commande sur l'UAV est transférée au premier terminal (20).

11. Procédé selon l'une quelconque des revendications 7 à 10, comprenant envoyer des informations de l'état d'UAV au premier terminal (20) uniquement si le premier terminal (20) a l'autorité de commander l'UAV et / ou une demande de surveillance d'UAV est reçue par la station de base (10) du premier terminal (20).

12. Procédé selon l'une quelconque des revendications 7 à 11, comprenant :
recevoir un terme de différence de position envoyé par une station de base de système de positionnement global différentiel, GPS, et des informations de position d'UAV transmises par l'UAV ; et
générer des informations de position réelle d'UAV en fonction du terme de différence de position et des informations de position d'UAV.
